# EUROPEAN PATENT APPLICATION

(11) **EP 4 372 413 A1**
(43) Date of publication of application: **22.05.2024**
(21) Application number: 22207463.5
(22) Date of filing: 15.11.2022
(51) Int. Cl.: G01S 13/02, G01S 17/04, G01S 17/66, G06V 20/56, G01S 13/86, G07C 9/00

(54) **METHODS FOR DECREASING AN ENERGY CONSUMPTION, APPARATUS, VEHICLE AND COMPUTER PROGRAM**

(71) Applicant: Bayerische Motoren Werke Aktiengesellschaft, 80809 München (DE)
(72) Inventor: Kuelzer, Daniel, 80799 München (DE); Mourad, Alaa, 80995 München (DE)

(57) **Abstract**

Embodiments relate to a method 100 for decreasing an energy consumption of a vehicle. The method 100 comprises obtaining 110 sensor data indicative of a usage intent of a user to use the vehicle. The method 100 further comprises determining 120 a user intention, whether the user intends to use the vehicle. The user intention is determined based on sensor data. The method 100 further comprises disabling 130 an initialization of the ranging session if no usage intent of the vehicle is determined. The disabling is based on the determined user intention.

## Description

The present disclosure relates to the field of ranging session. Embodiments relate to a method for decreasing an energy consumption, an apparatus, a vehicle and a computer program.

To permit a person an access to a vehicle a position of user equipment (UE) carried by the user can be used. To determine the position of the UE an ultra-wide band (UWB) ranging intent transmitted from the UE can be utilized. The ranging intent may define a trigger for the digital key framework to start (UWB) ranging. The ranging intent is triggered by the UE. Without a localization via UWB ranging, no change in the central locking system of a vehicle may be possible in advance to a user action. However, excessive use of ranging intents and corresponding ranging sessions will lead to high energy consumption. Thus, there may be a demand to decrease an energy consumption of a vehicle utilizing (UWB) ranging.

It is therefore a finding that an energy consumption of the vehicle can be reduced by disabling an initialization of a ranging session. The disabling is based on a determined user intention. The determination of the user intention is based on sensor data. Thus, by obtaining sensor data a false initialization of a ranging session can be prevented. In this way, an energy consumption of the vehicle can be decreased.

Examples provide a method for decreasing an energy consumption of a vehicle. The method comprises obtaining sensor data (e.g., of a first sensor) indicative of a usage intent of a user to use the vehicle. The method further comprises determining a user intention, whether the user intends to use the vehicle. The user intention is determined based on sensor data. The method further comprises disabling an initialization of the ranging session if no usage intent of the vehicle is determined. The disabling is based on the determined user intention. Thus, by obtaining the sensor data the user intention can be determined. For example, the user intention may indicate that the user does not want to use the vehicle. In this case an initialization of a ranging session can be disabled. Thus, it can be separated between a valid ranging intent (user wants to use the vehicle, therefore ranging session may be needed) and a false positive event (user does not want to use the vehicle, therefore no ranging session is needed). In this way, an energy consumption of the vehicle can be decreased since by false positive event no ranging session may be initiated.

In an example, the user intention may be determined based on sensor data of a LIDAR sensor and/or a camera. A LIDAR sensor and/or camera may allow a determination of the user intention in a simplified way.

In an example, the method may further comprise transmitting a disabling signal indicative of the disabling of the initialization of the ranging session. The disabling signal is transmitted to user equipment. In this way, a user of the user equipment can be informed about a disabled ranging session.

In an example, the method may further comprise receiving an acknowledgment signal indicative of the processing of the disabling signal. The acknowledgment signal is received from the user equipment. In this way, the user of the user equipment can inform the vehicle, e.g., a communication device part of the vehicle, about future measures. For example, the user may decide to disable the initialization of a ranging session for a predefined time.

In an example, the method may further comprise obtaining second sensor data (e.g., of a second sensor) indicative of the usage intent of the user and determining whether the user intends to use the vehicle based on the sensor data and the second sensor data. In this way, the reliability of the determination of the user intention can be increased.

In an example, the method may further comprise receiving intention data indicative of a ranging intent from the user equipment and validating the ranging intent based on the user intention and the intention data. By validating the ranging intent based on the user intention and the intention data a false positive event can be avoided.

In an example, if the initialization of the ranging session was disabled the method may further comprise obtaining feedback data indicative of an acceptance of the disabling of the initialization of the ranging session. Further, the method may comprise obtaining third sensor data (e.g., of the first sensor or the second sensor) indicative of a further usage intent of the user and determining a second user intention whether the user intends to use the vehicle. Determination of the second user intention is based on the third sensor data. The method may further comprise disabling an initialization of a ranging session if no usage intent of the vehicle is determined. Disabling of the initialization is based on the determined second user intention and the feedback data. In this way, the disabling can be improved by considering feedback, e.g., provided by the user.

Examples relate to an apparatus, comprising interface circuitry configured to communicate with a sensor and processing circuitry configured to perform a method as described above.

Examples relate to a vehicle, comprising an apparatus as described above and a sensor for measuring sensor data.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which
Fig. 1 shows an example of a method for a communication device; and
Fig. 2 show a block diagram of an example of an apparatus.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

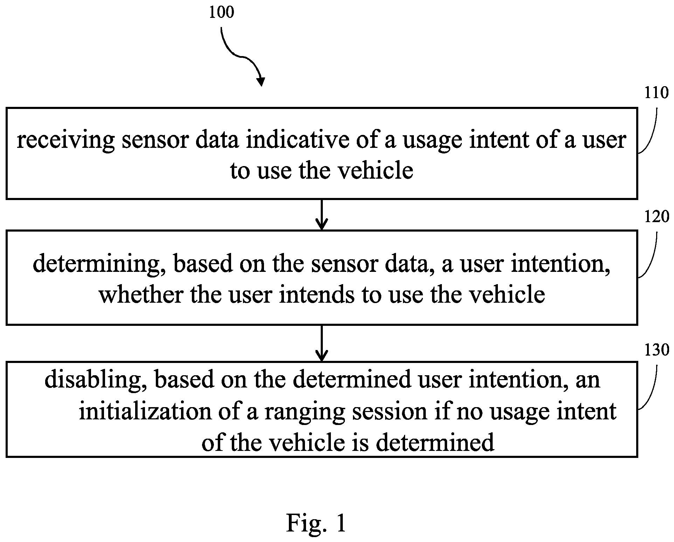

Fig. 1 shows an example of a method 100. The method 100 is for decreasing an energy consumption of a vehicle. The vehicle may comprise a communication device configured to perform the method 100. The method 100 comprises obtaining 110 (first) sensor data (e.g., of a first sensor) indicative of a usage intent of a user to use the vehicle. The method 100 further comprises determining 120 a user intention, whether the user intends to use the vehicle. The user intention is determined 120 based on sensor data. The method 100 further comprises disabling 130 an initialization of the ranging session if no usage intent of the vehicle is determined.

Obtaining 110 the sensor data may be performed by receiving (e.g., via an interface circuitry part of a communication device) the sensor data from a sensor, e.g., a sensor of an infrastructure and/or by measuring the sensor data using a sensor of the vehicle. The sensor data may comprise raw data of the sensor. The raw data may be evaluated by a processing circuitry part of the vehicle, e.g., by a control unit. Alternatively, the sensor data may comprise evaluated data, e.g., position data, distance data, which is indicative of the user intention.

Determining 120 the user intention may be performed by a processing circuitry part of a communication device of the vehicle, e.g., part of a control unit. A user intention may be a future action of the user. For example, the vehicle can be parked at a property of the user and the user may walk along the vehicle to perform certain actions such like emptying a trash bin, walking the dog, jogging. In this case, the user may have no intention to use the vehicle. Thus, for these actions initialization of the ranging session can be disabled 130. Optionally or alternatively, the intention of the user to use the vehicle can be determined 120. For example, the intention to use the vehicle can be determined based on a distance between the user and the vehicle or a trajectory of the user. In this way, the initialization of the ranging session may not be disabled if an intention to use the vehicle is determined 120.

The initialization of the ranging session ranging, e.g., an UWB ranging session, may be disabled 130 if no usage intent is determined, e.g., by the processing circuitry part of the communication device.

In an example, the user intention may be determined based on sensor data of a LIDAR sensor and/or a camera. In this way, a suitable sensor can be used to obtain the sensor data, e.g., to adjust obtaining 110 the sensor data to a specific situation, e.g., take into account obstacle, a daytime.

For example, the sensor data may be indicative of Bluetooth low energy signal received strength signal indication (RSSI) values, Bluetooth low energy distance measurement using channel sounding, especially by use of the channel sounding standard for Bluetooth (e.g., by use of mode 2), ultrasonic measurement, radar measurement or image recognition. Based on this sensor data a distance or position between the person and the vehicle, an object carried by the user, a trajectory of the user can be determined to determine 120 the user intention. Optionally, an environment can be considered to determine 120 the user intention. For example, if the vehicle is parked on a property of the user a position of a garbage can may be known to the communication device. Thus, determining 120 the user intention can be further based on the position of the garbage can, e.g., to determine 120 the intention to empty a trash bin.

For example, an intention not to use the vehicle may be determined 120 if a trajectory of the user indicates that the user is on the way to the garbage can. For example, an intention not to use the vehicle can be determined based on an image of a camera. If the image of the camera shows a user carrying a trash bin, the intention of the user might be to empty the trash bin. Thus, no intent to use the vehicle may be determined 120.

In an example, the method 100 may further comprise transmitting a disabling signal indicative of the disabling of the initialization of the ranging session. The disabling signal is transmitted to the user equipment. According to method 100 the initialization of the ranging session may be disabled 130. However, a user of the user equipment may not be satisfied with the disabling of the ranging session for a certain situation. By transmitting a disabling signal the user can be informed about the disabling 130 of the initialization of the ranging session. Thus, the user can perform certain measures to avoid the disabling 130 of the initialization of the ranging session, e.g., provide a time for which the initialization of the ranging session is disabled. Alternatively, the user can agree to the disabling 130 of the initialization of the ranging session. In this way, user experience can be increased.

In an example, the method 100 may further comprise receiving an acknowledgment signal indicative of the processing of the disabling signal. The acknowledgment signal is received from the user equipment. For example, the user may only agree to disable 130 the initialization of the ranging session for a predefined time. The user may provide a user input on the user equipment to disable the ranging session only for the predefined time, e.g., for the next minutes, until the next morning. In this way, the user can decide whether the initialization of the ranging session is disabled 130 and optionally for which time period.

In an example, the method 100 may further comprise obtaining second sensor data (of a second sensor) indicative of the usage intent of the user and determining whether the user intends to use the vehicle based on the sensor data and the second sensor data. For example, a robust implementation could use an ensemble learner to combine different sources of information, e.g., sensor data of multiple sensors. By combining the sensor data and the second sensor data a reliability of the determination of the user intention can be increased.

In an example, the method 100 may further comprise receiving intention data indicative of a ranging intent from the user equipment and validating the ranging intent based on the user intention and the intention data. The ranging intention data is received from the user equipment. Normally, the user equipment may trigger a start of the ranging session by transmitting a ranging intent. This may lead to an unnecessary initialization of a ranging session. Thus, by validating the ranging intent the vehicle (e.g., the communication device) can decide whether a ranging session is initiated or not. For example, the vehicle can reject the ranging intent, e.g., because no intention to use the vehicle could be determined 120. Thus, the likelihood that the user may use the vehicle may be too low to initiate the ranging session. In this way, the energy consumption of the vehicle can be decreased.

In an example, if the initialization of the ranging session was disabled the method 100 may further comprise obtaining feedback data indicative of an acceptance of the disabling of the initialization of the ranging session. Further, the method 100 may comprise obtaining third sensor data (e.g., from the first and/or the second sensor) indicative of a further usage intent of the user and determining a second user intention whether the user intends to use the vehicle. Determination of the second user intention is based on the third sensor data. The method 100 may further comprise disabling an initialization of a ranging session if no usage intent of the vehicle is determined. Disabling of the initialization is based on the determined second user intention and the feedback data. For example, the feedback data can be obtained by receiving the acknowledgment signal. For example, the feedback data can be obtained by user interaction with the vehicle, e.g., touching a door handle of the vehicle to open the vehicle. If a door handle of the vehicle is touched the initialization of the ranging session may be enabled again. In this case touching the door handle may be a fallback position to initialize the ranging session. Based on the feedback data a determination 120 of the user intention can be improved. For example, a trajectory of the user was received and based on the trajectory the initialization of the ranging session was disabled. However, the user of the user equipment may have touched the door handle. Thus, the communication device may store the information about the trajectory and the usage of the vehicle in a storage device. In this way, this trajectory may cause no disabling of the initialization of the ranging session for a future event again. Further, a continuous learning, where the user intent determination 120 may be based also on historical data (e.g., learning of patterns, user-specific) can be performed. Additionally, the continuous learning can be based on the feedback data.

In general, the communication device and/or the user equipment may be a device that is capable of communicating wirelessly. In particular, however, the user equipment may be a mobile user equipment, e.g., user equipment that is suitable for being carried around by a user. For example, the user equipment may be a user terminal or user equipment within the meaning of the respective communication standards being used for mobile communication. For example, the user equipment may be a mobile phone, such as a smartphone, or another type of mobile communication device, such as a smartwatch, a laptop computer, a tablet computer, or autonomous augmented-reality glasses. The communication device may be part of the vehicle, e.g., part of an electronic control unit of the vehicle.

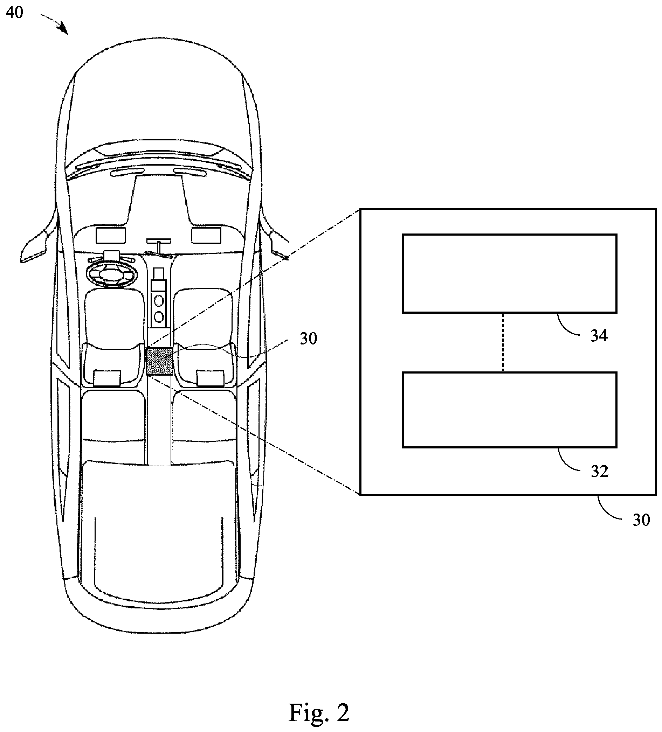

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2).

Fig. 2 shows an example of a block diagram of an apparatus 30, e.g., for a vehicle 40. The apparatus comprises interface circuitry 32 configured to communicate with a senor and processing circuitry 34 configured to perform a method as described above, e.g., with reference to Fig. 1. For example the apparatus may be comprised the vehicle 40, e.g., by a control unit of the vehicle 40. The apparatus may be the communication device as described with reference to Fig. 1.

For example, the vehicle 40 may be a land vehicle, such a road vehicle, a car, an automobile, an offroad vehicle, a motor vehicle, a bus, a robo-taxi, a van, a truck or a lorry. Alternatively, the vehicle 40 may be any other type of vehicle, such as a train, a subway train, a boat or a ship. For example, the proposed concept may be applied to public transportation (trains, bus) and future means of mobility (e.g., robo-taxis).

As shown in Fig. 2 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method describe above.

In examples the interface circuitry 32 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 2 may comprise one or more optional additional features corresponding to one or more aspects mentioned in connection with the proposed concept or one or more examples described above (e.g., Fig. 1).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### References

30 apparatus
32 processing circuitry
34 interface circuitry
40 vehicle
100 method for improving an ultra-wide band ranging session
110 receiving sensor data indicative of a usage intent
120 determining a user intention
130 disabling an initialization of a ranging session

## Claims

1. A method (100) for decreasing an energy consumption of a vehicle, comprising
receiving (110) sensor data indicative of a usage intent of a user to use the vehicle;
determining (120), based on the sensor data, a user intention, whether the user intends to use the vehicle; and
disabling (130), based on the determined user intention, an initialization of a ranging session if no usage intent of the vehicle is determined.

2. The method (100) according to claim 1, wherein
the user intention is determined based on sensor data of at least one sensor of a LIDAR sensor or a camera.

3. The method (100) according to any one of the preceding claims, further comprising
transmitting, to user equipment of the user, a disabling signal indicative of a disabling of the initialization of the ranging session.

4. The method (100) according to any claim 3, further comprising
receiving, from the user equipment, an acknowledgment signal indicative of a processing of the disabling signal.

5. The method (100) according to any one of the preceding claims, further comprising:
obtaining second sensor data from a further sensor indicative of a usage intent of the user; and
determining whether the user intends to use the vehicle based on the sensor data and the second sensor data.

6. The method (100) according to any one of the preceding claims, comprising:
receiving intention data indicative of a ranging intent from user equipment; and
validating the ranging intent based on the user intention and the intention data.

7. The method (100) according to any one of the preceding claims, further comprising:
if the initialization of the ranging session was disabled, obtaining feedback data indicative of an acceptance of the disabling of the initialization of the ranging session;
obtaining third sensor data indicative of a further usage intent of the user;
determining, based on the third sensor data, a second user intention, whether the user intends to use the vehicle; and
disabling (130), based on the determined second user intention and the feedback data, an initialization of a ranging session if no usage intent of the vehicle is determined.

8. An apparatus (30), comprising:
interface circuitry (32) configured to communicate with a sensor; and
processing circuitry (34) configured to perform a method (100) according to any one of the preceding claims.

9. A vehicle (50), comprising:
an apparatus according to claim 8; and
a sensor for measuring sensor data.

10. A computer program having a program code for performing the method (100) according to claim 1-7, when the computer program is executed on a computer, a processor, or a programmable hardware component.
